# EUROPEAN PATENT SPECIFICATION

(11) **EP 2 975 539 B1**
(45) Date of publication and mention of the grant of the patent: **04.12.2019**
(21) Application number: 15159532.9
(22) Date of filing: 17.03.2015
(51) Int. Cl.: G06F 16/21

(54) **SYSTEM AND METHOD FOR OPTIMIZING STORAGE OF MULTIDIMENSIONAL DATA IN DATA STORAGE**
SYSTEM UND VERFAHREN ZUR OPTIMIERUNG DES SPEICHERUNG MULTIDIMENSIONALER DATEN IN EINEM DATENSPEICHER
SYSTÈME ET PROCÉDÉ D'OPTIMISATION DE STOCKAGE DE DONNÉES MULTIDIMENSIONNELLES DANS UN STOCKAGE DE DONNÉES

(30) Priority: 18.07.2014 IN CH35432014; 04.09.2014 US 201414477504
(43) Date of publication of application: 20.01.2016
(73) Proprietor: Wipro Limited, 560 035 Karnataka (IN)
(72) Inventor: Gunjan, Abhishek, 823 001 Gaya (Bihar) (IN)
(74) Representative: Finnegan Europe LLP

(56) References cited:
- EP-A1- 2 541 437

## Description

The present subject matter is related, in general, to multidimensional data storage and more particularly, but not exclusively to a method and an optimization system for optimizing storage of multidimensional data in data storage.

Generally, a data storage or data warehouse is a computer based database utilized to store records and results pertaining to queries. The records correspond with entities, such as individuals, organizations and property etc. Each record contains one or more identifiers of the entity. For example, the name, address or account information are identifiers for an entity that is the named individual. The data storage stores results and records in rows and columns (e.g. in a table). Usually, one or more queries are raised from client machines for retrieving results and records for the one or more queries from the data storage.

In existing methods, different types of normalizations are carried out to organize the contents of the tables for databases and data warehouses. Sometimes, the one or more queries have the same pattern as the results and records. Typically, normalization is carried out for each of the one or more queries separately. In such cases, the method of normalization consumes time and bandwidth to retrieve results towards the same kinds of queries.

Also, existing data storage is restricted to five normal forms. Further, the existing data storage does not perform storing of data in a way matching the human thought process. In such cases, representation of data is static in nature and the nature of storage needs to be predefined at the time of creation of storage. Hence, the storage cannot be changed dynamically based on a change in user demand and access pattern.

In order to overcome the problem of normalization and growing dimensions in data, a fast indexing mechanism (e.g. hash) or a factorization mechanism (e.g. Map-Reduce) may be implemented. However, such an indexing mechanism is another way of storing the data which does not provide results based on data demand and usage pattern of different users.

Hence, there is a need for a method to provide a fast access mechanism for the same kinds of queries, and to handle increasing dimensionality of data in the data storage.

Although different to the present disclosure, EP2541437 relates to data base indexing and describes a method and a system for structuring or re-structuring a plurality of data records, wherein the plurality of data records are organized in a hierarchical structure of a plurality of clusters.

One or more shortcomings of the prior art are overcome or mitigated, and additional advantages are provided through the present disclosure. Additional features and advantages are realized through the techniques of the present disclosure. Other embodiments and aspects of the disclosure are described in detail herein and are considered a part of the claimed disclosure.

In an embodiment, there is provided a method for optimizing storage of multi-dimensional data in a data storage as claimed in claim 1. In another embodiment, there is provided an optimization system for optimizing storage of multi-dimensional data in a data storage as claimed in claim 9. In another embodiment, there is provided a non-transitory computer readable medium as claimed in claim 13.

Disclosed herein is a method for optimizing storage of multi-dimensional data in data storage. The method comprises analyzing, by an optimization system, a plurality of queries received over a period of time from one or more client machines. From the plurality of queries the optimization system determines a query pattern. Then, dimensionality of data is identified by the optimization system based on the query pattern for determining a data storage strategy. The dimensionality is characterized into eleven dimensions comprising four standard level dimensions and seven higher level dimensions. Next, based on the determined data storage strategy the optimization system performs at least one of: segmenting at least one of the data and columns of a table stored in the data storage based on the identified dimensionality of data; storing the data in remote data storage when the data is an element of a last higher level dimension; and/or fragmenting the higher level dimensions into one or more smaller level dimensions when the data is an element greater than the eleven dimensions. The steps of at least one of the analyzing, the determining, the identifying, and performing is performed by a processor of the optimization system.

In an aspect of the present disclosure, an optimization system for optimizing storage of multi-dimensional data in data storage is disclosed. The optimization system comprises a processor and a memory communicatively coupled to the processor. The memory stores processor-executable instructions, which, on execution, cause the processor to analyze a plurality of queries received over a period of time from one or more client machines. In use, the one or more client machines are communicatively connected to the optimization system over a network. Then, the optimization system determines a query pattern from the plurality of queries. Based on the query pattern, dimensionality of data is identified for determining a data storage strategy. The dimensionality is characterized into eleven dimensions comprising four standard level dimensions and seven higher level dimensions. Based on the determined data storage strategy, the optimization system performs at least one of: segmenting at least one of the data and columns of a table stored in the data storage based on the identified dimensionality of data; storing the data in remote data storage when the data is an element of a last higher level dimension; and/or fragmenting the higher level dimensions into one or more smaller level dimensions when the data is an element greater than the eleven dimensions.

The plurality of queries may include at least one of a Structured Query Language (SQL) based queries and Not Only Structured Query Language (NoSQL) based queries. The optimization system may be operable to determine the query pattern from the plurality of queries by selecting parameters from a group comprising, type of queries, location from where the queries are initiated, time at which queries are received, frequency of the queries, correlation between the columns of the queries, correlation between the constraints of the queries, volume of data retrieved on each of the queries, frequency of data usage, complexity of the join queries, keys used in the queries and dataset retrieved from demography of the queries. The optimization system may be operable to combine the columns of one or more tables into a table upon determining correlation between columns of the one or more tables of the data storage based on the query pattern. The optimization system may be operable to store metadata of the data, the table, and the dimensionality of the data in a master table.

The optimization system may be operable to provide alerts based on at least one of failure of the optimization system and the at least one secondary optimization system, syntax error in defining the queries, unavailability of space for storing the data, unavailable of data for the query and increase of query volume more than a predefined volume.

The optimization system may be operable to archive the data based on a lifespan of the data, wherein the lifespan of the data is determined from the query pattern. The data storage may be selected from at least one of a Structured Query Language (SQL) database and a Not Only Structured Query Language (NoSQL) database. The memory may comprise a master table to store metadata of the data, the table, and the dimensionality of the data. The optimization system may comprise one or more alerting units to provide alerts based on at least one of failure of the optimization system and at least one secondary optimization, syntax error in defining the queries, unavailability of space for storing the data, unavailable of data for the query and increase of query volume more than a predefined volume.

In another aspect of the present disclosure, a non-transitory computer readable medium for optimizing storage of multi-dimensional data in data storage is disclosed. The non-transitory computer readable medium includes instructions stored thereon that when processed by a processor causes an optimization system to perform acts of analyzing a plurality of queries received over a period of time from one or more client machines. Then, determining a query pattern from the plurality of queries is performed. Based on the query pattern dimensionality of data is identified for determining a data storage strategy. The dimensionality is characterized into eleven dimensions comprising four standard level dimensions and seven higher level dimensions. Based on the determined storage strategy, the processor performs at least one of: firstly, segmenting at least one of the data and columns of a table stored in the data storage based on the identified dimensionality of data; secondly, storing the data in remote data storage when the data is an element of a last higher level dimension; and/or thirdly, fragmenting the higher level dimensions into one or more smaller level dimensions when the data is an element greater than the eleven dimensions.

The foregoing summary is illustrative only and is not intended to be in any way limiting. In addition to the illustrative aspects, embodiments, and features described above, further aspects, embodiments, and features will become apparent by reference to the drawings and the following detailed description.

### Brief Description of the Drawings

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**Figure 1** illustrates a block diagram of optimization system for optimizing storage of multi-dimensional data in data storage in accordance with some embodiments of the present disclosure;
**Figure 2** illustrates a block diagram of a query analyzer engine of the optimization system for analyzing a plurality of queries in accordance with some embodiments of the present disclosure;
**Figure 3** illustrates a block diagram of a storage engine of the optimization system for identifying dimensionality of data in accordance with some embodiments of the present disclosure; and
**Figure 4** illustrates a flowchart showing method for optimizing storage of multi-dimensional data in the data storage in accordance with some embodiments of the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### Detailed Description

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, a specific embodiment thereof has been shown by way of example in the drawings and will be described in detail below. It should be understood, however that it is not intended to limit the disclosure to the particular forms disclosed, but on the contrary, the disclosure is to cover all modifications, falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

The present disclosure avoids normalization of the entire data storage for the kind of queries that require/demand the same kind of data. Thus, the present disclosure provides a method which stores only those data separately as required/demanded by the queries. The method is realized by an optimization system. For storing the data, the optimization system analyzes the pattern of the queries received from one or more client machines. Based on the pattern of the queries, the dimensionality of data is identified. The dimensionality of data is identified using a membrane theory (M-theory). M-theory is a theory in physics that unifies different versions of superstring theory. As per M-theory, the dimensionality of data cannot exceed 11 dimensions. In other words, the dimensionality is limited to 11 dimensions. The 11 dimensions comprise 7 higher level dimensions and 4 standard level dimensions. Out of the 7 higher level dimensions, a highest dimension is realized as a parallel data storage dimension (i.e. demography). Under the 11^{th} dimension, all the dimensions are hierarchical in nature with an overlap between lower 6 higher dimensions. The dimensionality of data is identified to evaluate whether the data demanded by the queries is an element of a higher level dimension or a standard level dimension. Then, based on the dimensionality of data, a storage strategy of multi-dimensional data in the data storage is implemented. In an embodiment, the data and/or table which is required by the queries is segmented based on the dimensionality of data. In another embodiment, the data is stored in a separate geography or remote data storage when the data is an element of 11^{th} dimension. In another embodiment, the higher level dimensions are fragmented into smaller level dimensions when the data is an element greater than the 11^{th} dimension. A reference pointer which comprises metadata of the tables, data and dimensionality of data is stored in a master table of the optimization system. In this way, quick access to the data tables is accomplished through the metadata stored in the master table of the optimization system. At regular intervals, the data from the data storage is archived by the optimization system based on the usage of data.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

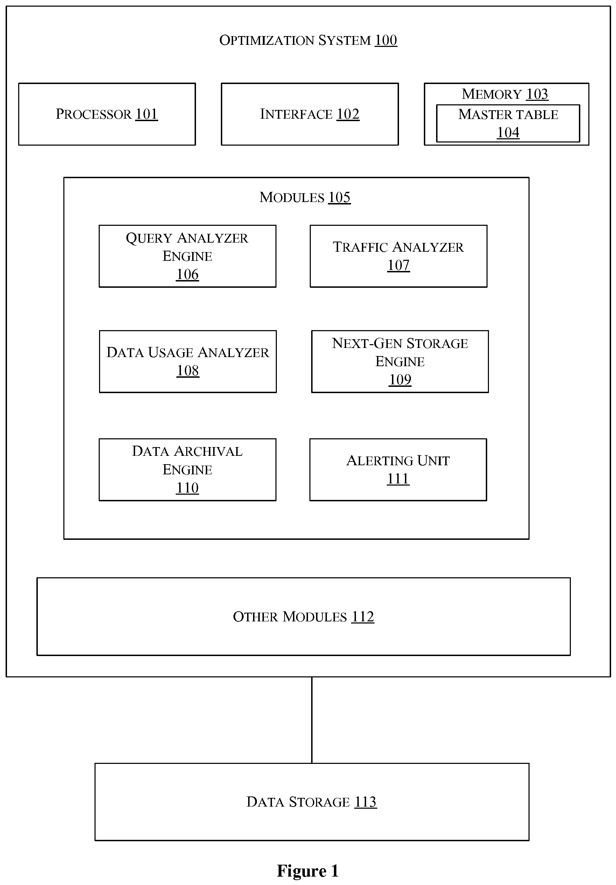

**Figure 1** illustrates a block diagram of an optimization system **100** for optimizing storage of multi-dimensional data in data storage **113** in accordance with some embodiments of the present disclosure.

The optimization system **100** comprises a central processing unit ("CPU" or "processor") **101,** an interface **102,** a memory **103,** modules **105** and other modules **112.** In one implementation, the optimization system **100** may be implemented in a variety of computing systems, such as a laptop computer, a desktop computer, a notebook, a workstation, a mainframe computer, a server, a network server, and the like. In an embodiment, the optimization system **100** is communicatively connected to one or more client machines (not shown in **figure 1**) and the data storage **113** through a network (not shown in **figure 1**)**.** Therefore, the optimization system **100** receives the plurality of queries from the one or more client machines through the network. Then, the optimization system **100** strategizes and optimizes the storage of multi-dimensional data in the data storage **113** through the network.

Examples of the one or more client machines include, but are not limited to, a desktop computer, a portable computer, a mobile phone, a handheld device, a workstation. The one or more client machines may be used by various end users. In an embodiment, the one or more client machines are used by associated users to raise a plurality of queries and access data from the data storage **113.** The at least one user may include a person, a person using the one or more client machines such as those included in this disclosure, or such a client machine itself. In one implementation, the one or more client machines may include an input/output (I/O) interface for communicating with input/output (I/O) devices (not shown in **figure 1**)**.** The one or more client machines are installed with one or more interfaces (not shown in **figure 1**) like software and/or hardware to support one or more communication links (not shown) for interacting with the data storage **113** through the optimization system **100.** In an embodiment, the one or more client machines communicate with the network via a network interface (not shown in **figure 1**). The network interface may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, etc. The distributed network includes, but is not limited to, a direct interconnection, an e-commerce network, a peer to peer (P2P) network, local area network (LAN), wide area network (WAN), wireless network (e.g., using Wireless Application Protocol), the Internet, and Wi-Fi etc.

The network through which the optimization system **100** is communicatively connected to the client machines and the data storage **113** is illustrated herein. The network may be a wireless network, wired network or a combination thereof. The network can be implemented as one of the different types of networks, such as intranet, local area network (LAN), wide area network (WAN), the Internet, and such. The network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the network may include a variety of network devices, including routers, bridges, servers, computing devices, storage devices, etc.

In another implementation, the optimization system **100** also acts as client machine. Therefore, the plurality of queries is received in the optimization system **100** for analysis and further processing.

The data storage **113** (sometimes called a data warehouse) is a database containing data which is used for reporting and analysis. The purpose of the data storage **113** is to store standardized, structured, consistent, integrated, correct, cleansed and timely data. The data storage **113** stores any number of data integrated from one or more disparate sources or operational systems in an organization. The data storage **113** may store current and historical data, and may be used for creating trending reports. Usually, the data in the data storage **113** is arranged into hierarchical groups (often called dimensions) and into facts and aggregate facts. The data in the data storage **113** is structured in a way to specifically address the reporting and analytic requirements. In an embodiment, the data storage **113** is a database includes, but is not limited to, a Structured Query Language (SQL) database and a Not Only Structured Query Language (NoSQL) database.

In one implementation, the processor **101** of the optimization system **100** may comprise at least one data processor for executing program components and for executing user- or system-generated queries. The processor **101** may include specialized processing units such as integrated system (bus) controllers, memory management control units, floating point units, graphics processing units, digital signal processing units, etc. The processor **101** may include a microprocessor, such as AMD Athlon, Duron or Opteron, ARM's application, embedded or secure processors, IBM PowerPC, Intel's Core, Itanium, Xeon, Celeron or other line of processors, etc. The processor **101** may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc. Among other capabilities, the processor **101** is configured to fetch and execute computer-readable instructions stored in the memory **103.**

The interface(s) **102** may include a variety of software and hardware interfaces, for example, a web interface, a graphical user interface, etc. The interface **102** is coupled with the processor **101** and an I/O device (not shown). The I/O device is configured to receive the plurality of queries from the one or more client machines via the interface **102** and transmit outputs or results for displaying in the I/O device via the interface **102.**

In one implementation, the memory **103** comprises a master table **104.** In an embodiment, the master table **104** stores metadata of data, tables and columns along with dimensionality of data. In an embodiment, the memory **103** may be implemented as a volatile memory device utilized by various elements of the optimization system **100** (e.g., as off-chip memory). For these implementations, the memory **103** may include, but is not limited to, random access memory (RAM), dynamic random access memory (DRAM) or static RAM (SRAM). In some embodiments, the memory **103** may include any of a Universal Serial Bus (USB) memory of various capacities, a Compact Flash (CF) memory, an Secure Digital (SD) memory, a mini SD memory, an Extreme Digital (XD) memory, a memory stick, a memory stick duo, an Smart Media Cards (SMC) memory, an Multimedia card (MMC) memory, and an Reduced-Size Multimedia Card (RS-MMC), for example, noting that alternatives are equally available. Similarly, the memory **103** may be of an internal type included in an inner construction of a corresponding optimization system **100,** or an external type disposed remote from such an optimization system **100.** Again, the memory **103** may support the above-mentioned memory types as well as any type of memory that is likely to be developed and appear in the near future, such as phase change random access memories (PRAMs), units, buzzers, beepers etc. The one or more units generate a notification for indicating the identified ferroelectric random access memories (FRAMs), and magnetic random access memories (MRAMs), for example.

In one implementation, the modules **105** of the optimization system **100** may be stored within the memory **103.** In one example, the modules **105**, amongst other things, include routines, programs, objects, components, and data structures, which perform particular tasks or implement particular abstract data types. The modules **105** may also be implemented as, signal processor(s), state machine(s), logic circuitries, and/or any other device or component that manipulate signals based on operational instructions. Further, the modules **105** can be implemented by one or more hardware components, by computer-readable instructions executed by a processing unit, or by a combination thereof.

The modules **105** may include, for example, a query analyzer engine **106,** a traffic analyzer **107,** a data usage analyzer **108,** a storage engine **109,** a data archival engine **110** and an alerting unit **111.** The optimization system **100** may also comprise other modules **112** to perform various miscellaneous functionalities of the optimization system **100.** It will be appreciated that such aforementioned modules may be represented as a single module or a combination of different modules.

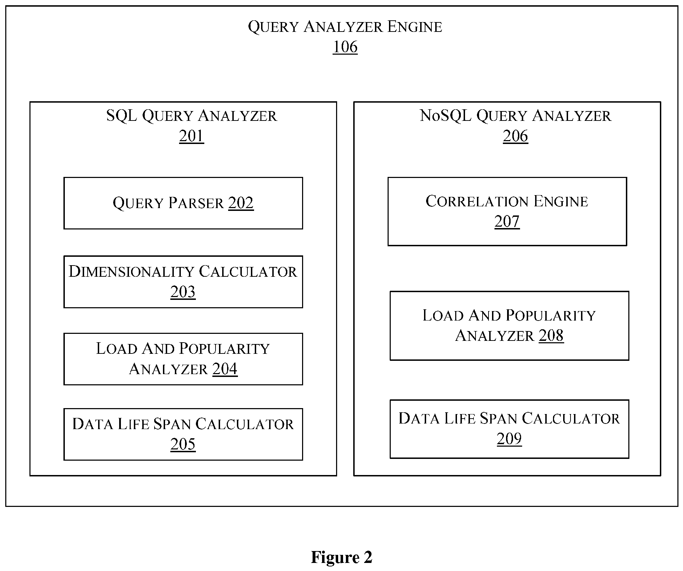

The plurality of queries received from the one or more client machines is analyzed by the query analyzer engine **106.** The query analyzer **106** comprises two types of analyzers such as a SQL query analyzer **201** and a NoSQL query analyzer **206** as shown in **figure 2****.**

The SQL query analyzer **201** is designed for analyzing SQL based queries. The SQL based queries are queries constructed to query data in relational databases. The SQL based queries are constructed using constructs include, but are not limited to, ANSI/ISO Standard, Interbase/Firebird, IBM DB2, IBM Informix, IBM Netezza, Microsoft/Sybase, Mimer SQL, Oracle, PostgreSQL, Sybase and Teradata etc. In an embodiment, the SQL query analyzer **201** analyzes the data to be fetched from the SQL database (not shown). The SQL query analyzer **201** comprises a query parser **202**, a dimensionality calculator **203,** a load and popularity analyzer **204** and a data life span calculator **205.** The query parser **202** parses the plurality of queries in terms of table names, columns and condition used in each of the plurality of queries. The dimensionality calculator **203** calculates the dimensionality as per M-theory after the plurality of queries are parsed based on the table, column and condition of the queries. That is, the dimensionality calculator **203** evaluates the level (1-11) of dimension for the data. In an embodiment, dimensionality is categorized up to 11 dimensions as defined in the M-theory. For example, considering a column named "employee name" is specified in the plurality of queries. Based on the frequency of column "employee name" used by the plurality of queries and the complexity of the queries, the column "employee name" is determined to be higher level dimension i.e. 4^{th} dimension by the dimensionality calculator **203.** The load and popularity analyzer **204** evaluates loading level and popularity of tables and columns specified by the plurality of queries. For example, considering the plurality of queries specifies table named "employee" and columns named "employee name" and "salary" which are used more frequently. Then, the load and popularity analyzer **204** evaluates that the table "employee" is highly loaded and the columns "employee name" and "salary" are most popularly used by the plurality of queries. The data life span calculator **205** evaluates the lifespan of the data in the data storage **113.** Typically, the data life span calculator **205** evaluates time after which the data is not fetched.

The NoSQL query analyzer **206** is designed for NoSQL based queries. The NoSQL based queries are the queries which make use of mechanism for storage and retrieval of data modeled in means other than the tabular relations that are used in relational databases. The NoSQL based queries are constructed using constructs include, but are not limited to, BaseX, Cloudant, Clusterpoint, Couchbase Server, Apache CouchDB, djondb, Solr, ElasticSearch, eXist, Jackrabbit, IBM Notes and IBM Domino, MarkLogic Server, MongoDB, ObjectDatabase++, Oracle NoSQL Database, OrientDB, CoreFoundation Property list, Sedna, SimpleDB, TokuMX and OpenLink Virtuoso etc. In an embodiment, the NoSQL query analyzer **306** analyzes the data to be fetched from the NoSQL database (not shown). In an embodiment, the NoSQL query analyzer **306** comprises a correlation engine **207,** a load and popularity analyzer **208** and a data life span calculator **209.** The correlation engine **207** determines correlation between different fields of the tables in the data storage **113.** Particularly, the correlation engine **207** determines correlation between different fields and the degree of popularity of certain fields stored in the NoSQL database. In an embodiment, the load and popularity analyzer **208** finds popularity of fields which is used to determine the dimensionality of fields and policy of storage of data. Also, the load and popularity analyzer **208** evaluates the increase in load due to storage of unwanted fields which optimizes the storage of only those data in the data storage **113** as required by the queries. In an embodiment, the data life span calculator **209** evaluates the lifespan of the data in the data storage **113** i.e. NoSQL database.

Referring back to **figure 1**, the query analyzer engine **106** analyzes the plurality of queries which are received over a period of time from the one or more client machines. For example, query 1, query 2, query 3 and query 4 may be received over a time of one hour, one after the other, from the client machine. The query 1, query 2, query 3 and query 4 are analyzed.

The query analyzer engine **106** determines a query pattern from the plurality of queries based on parameters and factors. Particularly, the query analyzer engine **106** determines the query pattern from the plurality of queries based on parameters including, but not limited to, type of queries, location from where the queries are initiated, time at which queries are received, frequency of the queries, correlation between the columns of the queries, correlation between the constraints of the queries, volume of data retrieved on each of the queries, frequency of data usage, complexity of the join queries, keys used in the queries and dataset retrieved from demography of the queries. Additionally, the query analyzer engine **106** determines redundant indexes in the data storage **113** based on historical query analysis. In an embodiment, the query analyzer engine **106** provides the analysis information to the traffic analyzer **107,** the data usage analyzer **108,** the storage engine **109,** the data archival engine **110** and the alerting unit **111.**

The traffic analyzer **107** receives the analysis information from the query analyzer engine **106.** Then, the traffic analyzer **107** analyzes the tables and columns of the data storage **113** which are under usage for the plurality of queries. Also, the traffic analyzer **107** analyzes number of times, columns and tables are used. Further, the traffic analyzer **107** analyzes the time at which the plurality of queries is received and location from where the plurality of queries is received.

The data usage analyzer **108** performs analysis on volume of data used by different types of query, data used by the queries based on the time and location from where the queries are received. Further, the data usage analyzer **108** performs analysis on the frequency of usage of the records by the queries and data which are unused. In an embodiment, the data usage analyzer **108** generates a report of data usage over a period of time.

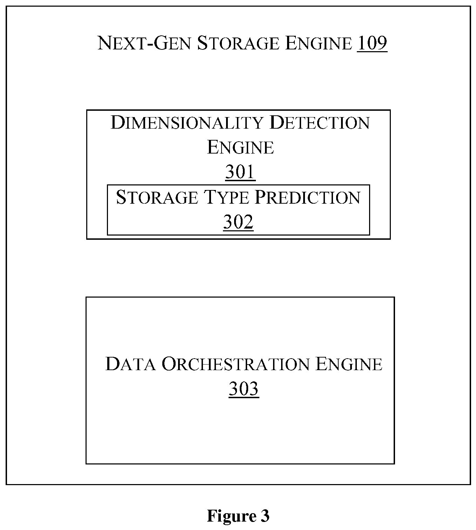

The storage engine **109** identifies dimensionality of data based on the query pattern determined by the query analyzer engine **106.** The storage engine **109** identifies the dimensionality of data for determining data storage strategy in the data storage **113.** The storage engine **109** comprises a dimensionality detection engine **301** for identifying the dimensionality of data as shown in **figure 3****.** The dimensionality detection engine **301** uses the analysis information from the traffic analyzer **107** and the data usage analyzer **108** to identify the dimensionality of data. In an embodiment, the dimensionality of data is identified based on types of the plurality queries, complexity of the plurality of queries and data used by the plurality of queries. In an embodiment, the dimensionality is characterized into 11 dimensions as per M-theory. The 11 dimensions comprise 4 standard level dimensions and 7 higher level dimensions. In an embodiment, the highest dimension i.e. 11^{th} dimension which is the highest dimension out of 7 higher level dimensions is demography. Particularly, the 11^{th} dimension is considered to be the parallel data storage dimension.

A non-limiting example is illustrated herein. This example contemplates a scenario of an advertising-media-metric company, where the data related to the company is fetched. It must be emphasized that the present disclosure relates to optimizing the storage of any kind of multidimensional data. The present disclosure does not relate to advertising, nor is it limited to storing data relating to advertising. For example, considering the queries, query 1, query 2, query 3 and query 4 are received and analyzed. Then, a query pattern from the query 1, the query 2, the query 3 and the query 4 is determined where all the queries are fetching similar kind of data from the data storage **113.** For example, all the four queries (i.e. query 1, the query 2, the query 3 and the query 4) are fetching data on the ad-media-metric company. Particularly, all the queries (i.e. query 1, the query 2, the query 3 and the query 4) are fetching at least one entities such as product, category, product_category, types of data stream, category of the advertisement (ad), region of click stream, custom section, data processing section, IP resolution and time mapping, sales information based on demography and campaign information. Now, dimensionality of data required by the queries within 11 dimensions is determined from the query pattern. These entities are assigned with dimensions based on the query pattern i.e. frequency with which the entities are used by all queries (i.e. query 1, the query 2, the query 3 and the query 4), complexity of the query where the entity is used etc. Each table represents one dimension. For example, each of the tables "product", "category", "product_category" and so on which are fields of the ad-media-metrics company is stored as one dimension. That is, the table "product" is stored as one dimension, the table "category" is stored as another dimension, the table "product_category" is stored as another dimension and so on.

In one implementation, the dimensionality detection engine **401** evaluates lower and higher dimensions of the columns. For example, considering a scenario of typical ad-media-metrics company, where the queries are defined to fetch the data on products, sales and category of the advertisement. Here, the 'products', 'sales' and 'category' are used by the queries more frequently. Thus, the entities products, sales and category are termed as higher dimensions. Another example, assuming the sub field of 'product' includes 'name of the product' and 'region of sales'. Based on the query pattern, the sub field 'region of sales' is used more frequently by the queries. Thus, the sub field 'region of sales' becomes higher dimension and is stored as a separate dimension in the data storage **113.** In another implementation, for example, assuming the sub field of 'product' is 'count of sales' which is used in a moderate frequency. Next, a correlation between 'product' and 'count of sales' is determined. The correlation is determined based on the fields, columns and tables specified by the queries. In the above illustrated example, the queries specify 'product' and 'count of sales'. Upon determining the correlation, the sub field 'count of sales' is determined as lower dimension which is stored under the higher dimension 'product' .

The storage type prediction **302** of the dimensionality detection engine **301** is configured to determine the type of storage based on the complexity of the plurality of queries and the data usage.

The storage engine **109** further comprises a data orchestration engine **303** which strategizes the storage of the data in the data storage **113.** Based on the dimensionality of data and storage type prediction, the data orchestration engine **303** performs segmentation of at least one of the data and the columns of a table stored in the data storage **113.** For example, consider a scenario of ad-media-metric-company for segmenting the columns of table. Now considering four queries namely query 1, query 2, query 3 and query 4 received from the one or more client machines over a period of time. The query pattern from the queries (i.e. query 1, query 2, query 3 and query 4) is determined which requires results on column "category" of the "product" table and column "social media" of the "types of data stream" table. That is, the column "category" and "social media" are used more frequently based on the query pattern. Then, the column "category" of the entity "product" is segmented and stored either in same table or as a separate table in the data storage **113** based on the degree of correlation and association. Similarly, the column "social media" of the table "types of data stream" is segmented and stored as a separate table in the data storage **113.** In an embodiment, for example, "product" dimension is used more frequently and is stored as separate dimension in the data storage **113.** If the columns "category" and "social media" are used in less frequent manner and are correlated to the "product" dimension, then the columns "category" and "social media" are stored under "product" dimension.

The data orchestration engine **303** performs storing of the data in remote data storage when the data is an element of a last higher level dimension, i.e. 11^{th} dimension. In an embodiment, the 11^{th} dimension is considered to be demography. The table structure in different demography is the same but the data entries in the table differ among different demography. In an embodiment, the 11^{th} dimension may be stored in same location of the data storage **113.** In another embodiment, the 11^{th} dimension may be stored in a different remote location of different data storage. Usually, the lower dimensions are stored in same storage location of the data storage **113.** In an embodiment, the data is stored in a separate remote location of the data storage **113** when the data is an element of the 11^{th} dimension. In an embodiment, the data may be stored separately in same location of the data storage **113** when the data is an element of the 11^{th} dimension. For example, the query pattern from the queries (i.e. query 1, query 2, query 3 and query 4) is determined which requires results on "rate of sale" in "Europe". In such case, the user specifies the queries with the field namely "Europe" under which the column "rate of sale" is specified. As per the queries pattern, the field "Europe" is higher dimension and assuming the field "Europe" is stored as an element of 11^{th} dimension. The column "rate of sale" is lower dimension under the higher dimension "Europe". Considering, the results on the field "Europe" and the "rate of sale" in "Europe" is stored in a data storage prescribed for storing information relating to country "Europe". Now, after a period of time, assuming the queries are fetching results on "rate of sale' in "France" country. The information on field "France" being one of the countries in "Europe" has information stored in the same data storage prescribed for the country "Europe". As per the query pattern, the field "France" becomes the higher dimension and is determined to be an element of 11^{th} dimension. The column the "rate of sale" must be under higher "France". Therefore, the field "France" is stored as a 11^{th} dimension in the data storage **113.**

Considering, the queries are fetching results on "rate of sale" for "US" and "France". The information relating to "US" is stored in geography of 'US' data storage. The information relating to "France" is stored in geography of 'France' data storage. When the queries specify the fields to retrieve information of both "US" and "France", then the demography of both the fields "US" and "France" are linked. Then, the information of "rate of sale" in both "US" and "France" are aggregated and are stored in the data storage **113.**

In one implementation, the data orchestration engine **303** fragments the higher level dimensions into one or more smaller level dimensions when the data is an element greater than the 11 dimensions. Consider the dimension 'region of the sale' of the 'product' entity which is already stored as a separate dimension i.e. 11^{th} dimension in the data storage **113.** Based on the query pattern, the "region of sale" which could be Europe is stored as 11^{th} dimension. Based on the complexity of query, the entity 'France' is also stored at 11^{th} dimension. In such a case, the entity 'Europe' becomes 12^{th} dimension due to relationship and dimensionality mapping. But, the dimensionality of data limits the highest dimension to be 11^{th} dimension. Hence, the dimension 'Europe' is broken into lower dimension where entity 'France' becomes the highest dimension and a smaller degree dimension table is created to store the mapping of 'France' with 'Europe'.

In an embodiment, the data orchestration engine **303** combines the columns of one or more tables into a table upon determining correlation between columns of the one or more tables of the data storage based on the query pattern. For example, the query pattern from the queries (i.e. query 1, query 2, query 3 and query 4) is determined which requires results on column "brand" of the "product" entity and "category type" of the "category" entity. Assuming, the columns "brand" and "category type" are correlated as per the query pattern. Then, the data column "brand" of the entity "product" and "category type" of the "category" entity is stored in a separate table in the data storage **113.**

Referring to **figure 1**, the master table **104** of the memory **103** stores metadata of the data, the tables, and the dimensionality of the data. In an embodiment, the metadata may be a pointer reference to the storage location of the data, the tables and dimensionality of the data. Particularly, the master table **104** stores the metadata after the data and/or tables are segmented, stored in the remote data storage, fragmented into smaller dimension, and dimensionality is identified.

In an embodiment, the data archival engine **110** of the optimization system **100** archives the data, the tables and columns from the data storage **113.** The archiving of the data, the tables, and the columns is carried out based on the lifespan of the data determined by the data lifespan calculator **205** from the query pattern. In an embodiment, the data, the tables and columns are archived when the data, the tables and columns are not accessed for a period of time.

In an embodiment, the optimization system **100** is replicated in at least one secondary optimization system (not shown). The data from the at least one secondary optimization system is retrieved for the plurality of queries when the optimization system **100** breaks down or not functional. In an embodiment, the optimization system **100** communicates signals to the at least one secondary optimization system indicating functional status of the optimization system **100.** The at least one secondary optimization system optimizes the storage of multi-dimensional data in the data storage **113** when the optimization system **100** is not functioning.

In an embodiment, the optimization system **100** includes a suggestion engine (not shown in **figure 1**)**.** The suggestion engine provides the time duration at which the data needs to be archived from the data storage **113.** The suggestion engine determines on splitting of the data archive process based on the query pattern i.e. archiving the data one by one in different time slots. Also, the suggestion engine determines on parallelizing the data archive process i.e. two or more data are archived together in the same time slot based on the query pattern. The suggestion engine recommends scaling of data storage clusters based on historical data analysis and data growing pattern. In an embodiment, the recommendation on archiving process for archiving data, tables, columns, indexes are configurable by the user, for example, system administrator. The suggestion engine comprises an optimizer and a feedback learning engine. The optimizer of the suggestion engine optimizes on the storage and archiving the columns in the table and data which are no more useful by the queries to reduce the turnaround of the queries. Further, the optimizer optimizes the storage environment by recommending archiving of indexes and adding of new indexes from and to the data storage **113** respectively. The optimizer optimizes the storage of data by changing the way of storage of data. The feedback learning engine uses the recommendation on archiving process from the system administrator as feedback information. Then, the feedback learning engine provides the feedback information to other components of the optimization system **100.**

In an embodiment, the alerting units **111** of the optimization system **100** provide alerts to the one or more client machines. The alerts are provided based on at least one of failure of the optimization system **100** and/or the at least one secondary optimization system. In another implementation, the alerts are provided based on factors include, but are not limited to, syntax error in defining the queries, unavailability of space for storing the data, unavailable of data for the query and increase of query volume more than a predefined volume. In an embodiment, the factors for providing alert are configurable by the user, for example, database administrator.

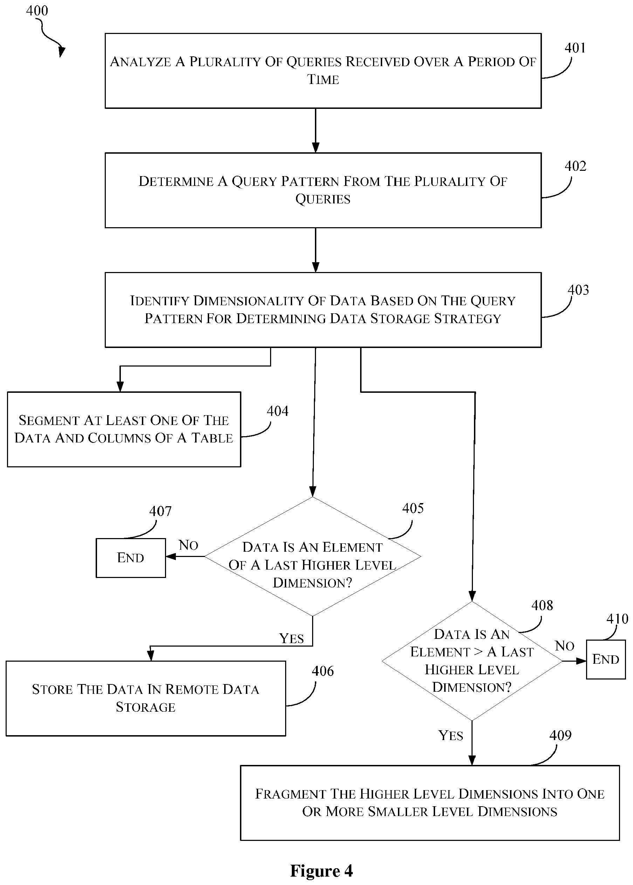

**Figure 4** illustrates a flowchart of method **400** for optimizing storage of multi-dimensional data in the data storage **113** in accordance with an embodiment of the present disclosure.

As illustrated in **Figure 4**, the method **400** comprises one or more blocks for optimizing the storage of multi-dimensional data in the data storage **113** performed by the optimization system **100.** The method **400** may be described in the general context of computer executable instructions. Generally, computer executable instructions can include routines, programs, objects, components, data structures, procedures, modules, and functions, which perform particular functions or implement particular abstract data types.

The order in which the method **400** is described is not intended to be construed as a limitation, and any number of the described method blocks can be combined in any order to implement the method **400.** Additionally, individual blocks may be deleted from the method **400** without departing from the scope of the subject matter described herein. Furthermore, the method **400** can be implemented in any suitable hardware, software, firmware, or combination thereof.

At **block 401**, a plurality of queries received over a period of time from the one or more client machines are analysed. In an embodiment, the query analyser engine **106** analyses the plurality of queries which are received over a period of time from the one or more client machines. In an embodiment, the plurality of queries is a Structured Query Language (SQL) based queries and/or Not Only Structured Query Language (NoSQL) based queries.

At **block 402**, a query pattern is determined from the plurality of queries. In an embodiment, the query analyser engine **106** determines the query pattern from the plurality of queries analysed at **block 401**. In an embodiment, the query pattern from the plurality of queries is determined by parameters include, but are not limited to, type of queries, location from where the queries are initiated, time at which queries are received, frequency of the queries, correlation between the columns of the queries, correlation between the constraints of the queries, volume of data retrieved on each of the queries, frequency of data usage, complexity of the join queries, keys used in the queries and dataset retrieved from demography of the queries.

At **block 403**, dimensionality of data is identified based on the query pattern for determining data storage strategy. In an embodiment, the storage engine **109** identifies the dimensionality of data based on the query pattern determined at **block 402** for determining data storage strategy. In an embodiment, the dimensionality is characterized into 11 dimensions comprising 4 standard level dimensions and 7 higher level dimensions.

At **block 404**, at least one of the data and the columns of a table stored in the data storage **113** are segmented based on the dimensionality of data. In an embodiment, the data and/or columns of the table are segmented based on the dimensionality of data identified at **block 403**.

At **block 405**, a condition is checked whether the data is an element of a last higher level dimension. If the data is an element of the last higher level dimension i.e. 11^{th} dimension, then, the process proceeds to **block 406** via "**YES**" where the data is stored in remote data storage. If the data is not an element of the last higher level dimension, then the process proceeds to **block 407** via "**NO**" where the process ends.

At **block 408**, a condition is checked whether the data is an element greater than the last higher level dimension. If the data is an element greater than the 11^{th} dimension, then the process proceeds to **block 409** via "**YES**" where the higher level dimensions are fragmented into one or more smaller level dimensions. If the data is not an element of the last higher level dimension, then the process proceeds to **block 410** via "**NO**" where the process ends.

In an embodiment, the process performs combining the columns of one or more tables into a table upon determining correlation between columns of the one or more tables of the data storage based on the query pattern.

In an embodiment, metadata of the data, the table, and the dimensionality of the data are stored in the master table **104** of the memory **103.**

In an embodiment, the process includes replicating the optimization system **100** in at least one secondary optimization system.

In an embodiment, the process includes providing alerts through the alerting units **111** based on at least one of failure of the optimization system **100** and the at least one secondary optimization system, syntax error in defining the queries, unavailability of space for storing the data, unavailable of data for the query and increase of query volume more than a predefined volume.

In an embodiment, the process includes archiving the data by the data archival engine **110** based on a lifespan of the data determined by the data life span calculator **205** based on the query pattern.

Advantages of the embodiments of the present disclosure are illustrated herein.

Embodiments of the present disclosure eliminate the process of normalization for the same kind of queries.

Embodiments of the present disclosure cache the required tables, columns, and data in a master table for faster access based on kinds of queries.

Embodiments of the present disclosure manage any number of dimensions of data. Particularly, multi-dimensional data are managed in the data storage **104** by the present disclosure.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may comprise media such as magnetic storage medium (e.g., hard disk drives, floppy disks, tape, etc.), optical storage (CD-ROMs, DVDs, optical disks, etc.), volatile and nonvolatile memory devices (e.g., EEPROMs, ROMs, PROMs, RAMs, DRAMs, SRAMs, Flash Memory, firmware, programmable logic, etc.), etc. Further, non-transitory computer-readable media comprise all computer-readable media except for a transitory. The code implementing the described operations may further be implemented in hardware logic (e.g., an integrated circuit chip, Programmable Gate Array (PGA), Application Specific Integrated Circuit (ASIC), etc.).

Still further, the code implementing the described operations may be implemented in "transmission signals", where transmission signals may propagate through space or through a transmission media, such as an optical fiber, copper wire, etc. The transmission signals in which the code or logic is encoded may further comprise a wireless signal, satellite transmission, radio waves, infrared signals, Bluetooth, etc. The transmission signals in which the code or logic is encoded is capable of being transmitted by a transmitting station and received by a receiving station, where the code or logic encoded in the transmission signal may be decoded and stored in hardware or a non-transitory computer readable medium at the receiving and transmitting stations or devices. An "article of manufacture" comprises non-transitory computer readable medium, hardware logic, and/or transmission signals in which code may be implemented. A device in which the code implementing the described embodiments of operations is encoded may comprise a computer readable medium or hardware logic. Of course, those skilled in the art will recognize that many modifications may be made to this configuration without departing from the scope of the invention, and that the article of manufacture may comprise suitable information bearing medium known in the art.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **Figure 4** show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method (400) for optimizing storage of multi-dimensional data in a data storage (103), said method comprising:
analyzing (401), by an optimization system, a plurality of queries received over a period of time from one or more client machines, each query fetching an entity from the data storage;
determining (402), by the optimization system, a query pattern from the plurality of queries, the query pattern comprising the most frequently fetched entities in the plurality of queries;
identifying (403), by the optimization system, a dimensionality of the data based on the query pattern, wherein the dimensionality has no more than eleven dimensions, and wherein the no more than eleven dimensions correspond to a respective one of the most frequently fetched entities; and
storing data in the data storage by performing, by the optimization system, at least one of:
segmenting (404) at least one of the data and columns of a table used by the queries and stored in the data storage (103) based on the identified dimensionality of the data; or
storing (406) the data in remote data storage (113) when the data is an element of the eleventh dimension; or
breaking (409) the higher level dimensions into one or more smaller level dimensions when the data is an element greater than the eleven dimensions.

2. The method as claimed in claim 1, wherein the plurality of queries is at least one of a Structured Query Language (SQL) based queries and Not Only Structured Query Language (NoSQL) based queries.

3. The method as claimed in claim 1 or claim 2, wherein the query pattern from the plurality of queries is determined by parameters selected from a group comprising, type of queries, location from where the queries are initiated, time at which queries are received, frequency of the queries, correlation between the columns of the queries, correlation between the constraints of the queries, volume of data retrieved on each of the queries, frequency of data usage, complexity of the join queries, keys used in the queries and dataset retrieved from demography of the queries.

4. The method as claimed in any of the preceding claims, further comprising combining the columns of one or more tables into a table upon determining correlation between columns of the one or more tables of the data storage (103) based on the query pattern.

5. The method as claimed in any of the preceding claims, further comprising storing metadata of the data, the table, and the dimensionality of the data in a master table (104).

6. The method as claimed in any of the preceding claims, further comprising providing alerts based on at least one of failure of the optimization system and the at least one secondary optimization system, syntax error in defining the queries, unavailability of space for storing the data, unavailable of data for the query and increase of query volume more than a predefined volume.

7. The method as claimed in any of the preceding claims, further comprising archiving the data based on a lifespan of the data, wherein the lifespan of the data is determined from the query pattern.

8. The method as claimed in any of the preceding claims, wherein the data storage (103) comprises a Structured Query Language (SQL) database and/or a Not Only Structured Query Language (NoSQL) database.

9. An optimization system (100) for optimizing storage of multi-dimensional data in a data storage (103), said optimization system comprising:
a processor (101);
a memory (103) communicatively coupled to the processor (101), wherein the memory (103) stores processor-executable instructions, which, on execution, cause the processor to:
analyze (401) a plurality of queries received over a period of time from one or more client machines, each query fetching an entity from the data storage;
determine (402) a query pattern from the plurality of queries, the query pattern comprising the most frequently fetched entities in the plurality of queries;
identify (403) a dimensionality of the data based on the query pattern for, wherein the dimensionality has no more than eleven dimensions, and wherein the no more than eleven dimensions correspond to a respective one of the most frequently fetched entities; and
store data in the data storage by performing at least one of:
segmenting (404) at least one of the data and columns of a table used by the queries and stored in the data storage (103) based on the identified dimensionality of data; or
storing (406) the data in remote data storage (113) when the data is an element of the eleventh dimension; or
breaking (409) the higher level dimensions into one or more smaller level dimensions when the data is an element greater than the eleven dimensions.

10. The optimization system (100) as claimed in claim 9, wherein the data storage (103) is selected from at least one of Structured Query Language (SQL) database and Not Only Structured Query Language (NoSQL) database.

11. The optimization system (100) as claimed in claim 9 or claim 10, wherein the memory (103) comprises a master table (104) to store metadata of the data, the table, and the dimensionality of the data.

12. The optimization system (100) as claimed in any of claims 9 to 11, further comprising one or more alerting units to provide alerts based on at least one of failure of the optimization system and at least one secondary optimization, syntax error in defining the queries, unavailability of space for storing the data, unavailable of data for the query and increase of query volume more than a predefined volume.

13. A non-transitory computer readable medium including instructions stored thereon that when processed by a processor (101) cause an optimization system (100) to perform the method (400) as claimed in any of claims 1 to 8.

## Patentansprüche

1. Verfahren (400) zur Optimierung der Speicherung multidimensionaler Daten in einem Datenspeicher (103), das Verfahren umfassend:
Analysieren (401) einer Vielzahl von Abfragen, die über einen Zeitraum von einer oder mehreren Client-Maschinen empfangen wurden, durch ein Optimierungssystem, wobei jede Abfrage, eine Einheit aus dem Datenspeicher abruft;
Bestimmen (402) eines Abfragemusters aus der Vielzahl von Abfragen durch das Optimierungssystem, wobei das Abfragemuster die am häufigsten abgerufenen Einheiten in der Vielzahl von Abfragen umfasst;
Identifizieren (403) einer Dimensionalität der Daten durch das Optimierungssystem auf Grundlage des Abfragemusters, wobei die Dimensionalität nicht mehr als elf Dimensionen aufweist, und wobei die nicht mehr als elf Dimensionen einer entsprechenden der am häufigsten abgerufenen Abfragen entsprechen;
und Speichern von Daten in dem Datenspeicher durch Durchführen von zumindest einem von Folgenden durch das Optimierungssystem:
Segmentieren (404) von zumindest einem von den Daten und Spalten einer Tabelle, die von den Abfragen verwendet und in dem Datenspeicher (103) gespeichert werden, auf Grundlage der identifizierten Dimensionalität der Daten;
oder Speichern (406) der Daten in einem entfernten Datenspeicher (113), wenn die Daten ein Element der elften Dimension sind;
oder Aufbrechen (409) der Dimensionen höherer Ebene in eine oder mehrere Dimensionen niedrigerer Ebene, wenn die Daten ein Element sind, das größer als die elf Dimensionen ist.

2. Verfahren nach Anspruch 1, wobei die Vielzahl von Abfragen zumindest eine von einer Structured-Query-Language-(SQL-)basierten Abfragen und Not-Only-Structured-Query-Language-(NoSQL-)basierten Abfragen ist.

3. Verfahren nach Anspruch 1 oder Anspruch 2, wobei das Abfragemuster aus der Vielzahl von Abfragen durch Parameter bestimmt wird, die aus einer Gruppe ausgewählt sind, die Folgendes umfasst: Art von Abfragen, Standort, von dem die Abfragen initiiert werden, Zeitpunkt, zu dem Abfragen empfangen werden, Häufigkeit der Abfragen, Korrelation zwischen den Spalten der Abfragen, Korrelation zwischen den Einschränkungen der Abfragen, bei jeder der Abfragen abgerufenes Datenvolumen, Häufigkeit der Datennutzung, Komplexität der Join-Abfragen, in den Abfragen verwendete Schlüssel und aus der Demographie der Abfragen empfangener Datensatz.

4. Verfahren nach einem der vorhergehenden Ansprüche, ferner umfassend Kombinieren der Spalten einer oder mehrerer Tabellen in eine Tabelle beim Bestimmen von Korrelation zwischen Spalten der einen oder mehreren Tabellen des Datenspeichers (103) auf Grundlage des Abfragemusters.

5. Verfahren nach einem der vorhergehenden Ansprüche, ferner umfassend Speichern von Metadaten der Daten, der Tabelle und der Dimensionalität der Daten in einer Mastertabelle (104).

6. Verfahren nach einem der vorhergehenden Ansprüche, ferner umfassend Bereitstellen von Alarmen auf Grundlage von zumindest einem von Ausfall des Optimierungssystems und des zumindest einen sekundären Optimierungssystems, Syntaxfehler beim Definieren der Abfragen, Nichtverfügbarkeit von Platz zur Speicherung der Daten, Nichtverfügbarkeit von Daten für die Abfrage und Erhöhung des Abfragevolumens auf mehr als ein vorbestimmtes Volumen.

7. Verfahren nach einem der vorhergehenden Ansprüche, ferner umfassend Archivieren der Daten auf Grundlage einer Laufzeit der Daten, wobei die Laufzeit der Daten aus dem Abfragemuster bestimmt wird.

8. Verfahren nach einem der vorhergehenden Ansprüche, wobei der Datenspeicher (103) eine Structured-Query-Language-(SQL-)Datenbank und/oder eine Not-Only-Structured-Query-Language-(NoSQL-)Datenbank umfasst.

9. Optimierungssystem (100) zur Optimierung der Speicherung multidimensionaler Daten in einem Datenspeicher (103), das Optimierungssystem umfassend:
einen Prozessor (101);
einen Speicher (103), der kommunikativ an den Prozessor (101) gekoppelt ist, wobei der Speicher (103) vom Prozessor ausführbare Anweisungen speichert, die den Prozessor bei Ausführung zu Folgendem veranlassen:
Analysieren (401) einer Vielzahl von Abfragen, die über einen Zeitraum von einer oder mehreren Client-Maschinen empfangen wurden, wobei jede Abfrage eine Einheit aus dem Datenspeicher abruft;
Bestimmen (402) eines Abfragemusters aus der Vielzahl von Abfragen, wobei das Abfragemuster die am häufigsten abgerufenen Einheiten in der Vielzahl von Abfragen umfasst;
Identifizieren (403) einer Dimensionalität der Daten auf Grundlage des Abfragemusters, wobei die Dimensionalität nicht mehr als elf Dimensionen aufweist, und wobei die nicht mehr als elf Dimensionen einer entsprechenden der am häufigsten abgerufenen Abfragen entsprechen;
und Speichern von Daten in dem Datenspeicher durch Durchführen von zumindest einem von Folgenden:
Segmentieren (404) von zumindest einem von den Daten und Spalten einer Tabelle, die von den Abfragen verwendet und in dem Datenspeicher (103) gespeichert werden, auf Grundlage der identifizierten Dimensionalität von Daten;
oder Speichern (406) der Daten in einem entfernten Datenspeicher (113), wenn die Daten ein Element der elften Dimension sind;
oder Aufbrechen (409) der Dimensionen höherer Ebene in eine oder mehrere Dimensionen niedrigerer Ebene, wenn die Daten ein Element sind, das größer als die elf Dimensionen ist.

10. Optimierungssystem (100) nach Anspruch 9, wobei der Datenspeicher (103) ausgewählt ist aus zumindest einer von einer Structured-Query-Language-(SQL-)Datenbank und einer Not-Only-Structured-Query-Language-(NoSQL-)Datenbank.

11. Optimierungssystem (100) nach Anspruch 9 oder Anspruch 10, wobei der Speicher (103) eine Mastertabelle (104) umfasst, um Metadaten der Daten, der Tabelle und der Dimensionalität der Daten zu speichern.

12. Optimierungssystem (100) nach einem der Ansprüche 9 bis 11, ferner umfassend eine oder mehrere Alarmierungseinheiten, um Alarme bereitzustellen auf Grundlage von zumindest einem von Ausfall des Optimierungssystems und von zumindest einer sekundären Optimierung, Syntaxfehler beim Definieren der Abfragen, Nichtverfügbarkeit von Platz zur Speicherung der Daten, Nichtverfügbarkeit von Daten für die Abfrage und Erhöhung des Abfragevolumens auf mehr als ein vorbestimmtes Volumen.

13. Nichtflüchtiges, computerlesbares Medium, das darauf gespeicherte Anweisungen beinhaltet, die, wenn sie von einem Prozessor (101) verarbeitet werden, ein Optimierungssystem (100) dazu veranlassen, das Verfahren (400) nach einem der Ansprüche 1 bis 8 durchzuführen.

## Revendications

1. Procédé (400) permettant d'optimiser le stockage de données multidimensionnelles dans un dispositif de stockage de données (103), ledit procédé comprenant :
l'analyse (401), par un système d'optimisation, d'une pluralité de requêtes reçues sur une période de temps en provenance d'une ou de plusieurs machines clientes, chaque requête récupérant une entité à partir du dispositif de stockage de données ;
la détermination (402), par le système d'optimisation, d'un motif de requête à partir de la pluralité de requêtes, le motif de requête comprenant les entités les plus fréquemment récupérées dans la pluralité de requêtes ;
l'identification (403), par le système d'optimisation, d'une dimensionnalité des données sur la base du motif de requête, ladite dimensionnalité ne possédant pas plus de onze dimensions, et lesdites onze dimensions au maximum correspondant à une entité respective parmi les entités les plus fréquemment récupérées ;
et le stockage des données dans le dispositif de stockage de données en effectuant, par le système d'optimisation, au moins l'un de :
la segmentation (404) d'au moins l'une des données et des colonnes d'une table utilisée par les requêtes et stockée dans le dispositif de stockage de données (103) sur la base de la dimensionnalité identifiée des données ;
ou du stockage (406) des données dans un dispositif de stockage de données à distance (113) lorsque les données sont des éléments de la onzième dimension ;
ou de la décomposition (409) des dimensions de niveau supérieur en une ou plusieurs dimensions de niveau inférieur lorsque les données sont des éléments supérieurs aux onze dimensions.

2. Procédé selon la revendication 1, ladite pluralité de requêtes étant au moins l'une des requêtes basées sur le langage de requête structurée (SQL) et des requêtes basées sur pas seulement le langage de requête structurée (NoSQL).

3. Procédé selon la revendication 1 ou 2, ledit motif de requête à partir de la pluralité de requêtes étant déterminé par des paramètres sélectionnés parmi un groupe comprenant, le type de requête, l'emplacement à partir duquel les requêtes sont initiées, l'heure à laquelle les requêtes sont reçues, la fréquence des requêtes, la corrélation entre les colonnes des requêtes, la corrélation entre les contraintes des requêtes, le volume de données récupérées sur chacune des requêtes, la fréquence d'utilisation des données, la complexité des requêtes de jointure, les clés utilisées dans les requêtes et l'ensemble de données récupérées à partir de la démographie des requêtes.

4. Procédé selon l'une quelconque des revendications précédentes, comprenant en outre la combinaison des colonnes d'une ou de plusieurs tables en une table lors de la détermination de la corrélation entre les colonnes de la ou des tables du dispositif de stockage de données (103) sur la base du motif de requête.

5. Procédé selon l'une quelconque des revendications précédentes, comprenant en outre le stockage des métadonnées des données, de la table et de la dimensionnalité des données dans une table maîtresse (104).

6. Procédé selon l'une quelconque des revendications précédentes, comprenant en outre l'émission d'alertes sur la base d'au moins l'un d'une défaillance du système d'optimisation et de l'au moins un système d'optimisation secondaire, d'une erreur de syntaxe dans la définition des requêtes, d'une indisponibilité d'espace destiné au stockage des données, d'une indisponibilité de données pour la requête et d'une augmentation du volume de requêtes au delà d'un volume prédéfini.

7. Procédé selon l'une quelconque des revendications précédentes, comprenant en outre l'archivage des données sur la base d'une durée de vie des données, ladite durée de vie des données étant déterminée à partir du motif de requête.

8. Procédé selon l'une quelconque des revendications précédentes, ledit dispositif de stockage de données (103) comprenant une base de données à langage de requête structurée (SQL) et/ou une base de données à pas seulement le langage de requête structurée (NoSQL).

9. Système d'optimisation (100) destiné à optimiser le stockage de données multidimensionnelles dans un dispositif de stockage de données (103), ledit système d'optimisation comprenant :
un processeur (101) ;
un dispositif de stockage (103) couplé en communication au processeur (101), ledit dispositif de stockage (103) stockant des instructions exécutables par le processeur, qui, lors de l'exécution, amènent le processeur à :
analyser (401) une pluralité de requêtes reçues sur une période de temps en provenance d'un ou de plusieurs ordinateurs clients, chaque requête récupérant une entité à partir du dispositif de stockage de données ;
déterminer (402) un motif de requête à partir la pluralité de requêtes, le motif de requête comprenant les entités le plus fréquemment récupérées dans la pluralité de requêtes ;
identifier (403) une dimensionnalité des données sur la base du motif de requête, ladite dimensionnalité ne possédant pas plus de onze dimensions, et lesdites onze dimensions au maximum correspondant à une entité la plus fréquemment récupérée respective parmi les requêtes les plus fréquemment récupérées ;
et stocker des données dans le dispositif de stockage de données en effectuant au moins l'un de :
la segmentation (404) d'au moins l'une des données et des colonnes d'une table utilisée par les requêtes et stockée dans le dispositif de stockage de données (103) sur la base de la dimensionnalité identifiée de données ;
ou du stockage (406) des données dans un dispositif de stockage de données à distance (113) lorsque les données sont des éléments de la onzième dimension ;
ou de la décomposition (409) des dimensions de niveau supérieur en une ou plusieurs dimensions de niveau inférieur lorsque les données sont des éléments supérieurs aux onze dimensions.

10. Système d'optimisation (100) selon la revendication 9, ledit dispositif de données(103) étant sélectionnée parmi au moins une base de données à langage de requête structurée (SQL) et une base de données à pas seulement le langage de requête structurée (NoSQL).

11. Système d'optimisation (100) selon la revendication 9 ou 10, ledit dispositif de stockage (103) comprenant une table maîtresse (104) pour stocker des métadonnées des données, la table et la dimensionnalité des données.

12. Système d'optimisation (100) selon l'une quelconque des revendications 9 à 11, comprenant en outre une ou plusieurs unités d'alerte pour émettre des alertes sur la base d'au moins l'une d'une défaillance du système d'optimisation et d'au moins une optimisation secondaire, d'une erreur de syntaxe dans la définition des requêtes, d'une indisponibilité de l'espace destiné au stockage des données, d'une indisponibilité des données pour la requête et d'une augmentation du volume de requêtes au-delà d'un volume prédéfini.

13. Support lisible par ordinateur non transitoire comprenant des instructions stockées sur celui-ci qui lorsqu'elles sont traitées par un processeur (101), amènent un système d'optimisation (100) à effectuer le procédé (400) selon l'une quelconque des revendications 1 à 8.
